# EUROPÄISCHE PATENTSCHRIFT

(11) **EP 2 000 517 B1**
(45) Veröffentlichungstag und Bekanntmachung des Hinweises auf die Patenterteilung: **20.10.2010**
(21) Anmeldenummer: 08004225.2
(22) Anmeldetag: 07.03.2008
(51) Int. Cl.: C09J 9/00, C09J 11/00

(54) **Mehrfarbkomponenten-Klebersystem**
Multiple colour component adhesive system
Système de collage à composants multicolores

(30) Priorität: 04.06.2007 DE 102007026256
(43) Veröffentlichungstag der Anmeldung: 10.12.2008
(73) Patentinhaber: AKEMI chemisch technische Spezialfabrik GmbH, 90451 Nürnberg (DE)
(72) Erfinder: Zimmermann, Dieter, 90579 Langenzenn (DE)
(74) Vertreter: LOUIS, PÖHLAU, LOHRENTZ

(56) Entgegenhaltungen:
- WO-A-2005/087850
- DE-U1- 29 508 712
- US-A1- 2003 216 513
- US-A1- 2006 065 364

## Beschreibung

Die vorliegende Erfindung betrifft ein Mehrfarbkomponenten-Klebersystem auf der Basis von mindestens zwei miteinander mischbaren polymerisierbaren Komponenten und ggf. einer Härter-Komponente, welches geeignet ist, einen Kleber, insbesondere Steinkleber, mit jeder beliebigen Farbgebung bereitzustellen. Ferner betrifft die vorliegende Erfindung die Verwendung des auf der Basis des Mehrfarbkomponenten-Klebersystems hergestellten Klebers als Klebermasse, Fugenmasse, Ausbesserungsmaterial und/oder Ausfüllmaterial, vorzugsweise für Kunststoffe, insbesondere Kunststeine, mineralische Substrate, insbesondere Natursteine, Keramik, Steingut, Porzellan, Metalle und/oder Holz, sowie ein Verfahren zum Herstellen des Klebers.

Die WO 2005/087850 A1 beschreibt ein Klebersystem, umfassend zwei miteinander mischbare polymerisierbare Komponenten, wobei beide Komponenten ein farbgebendes Mittel beinhalten, die voneinander verschiedenfarbig sind.

Die US 2006/0065364 A1 beschreibt ein Klebersystem, umfassend einen polymerisierbaren Kleberteil und einen, mit dem Kleberteil mischbaren, polymerisierbaren Aktivatorteil, wobei beide Komponenten ein farbgebendes Mittel beinhalten, die voneinander verschiedenfarbig sind.

Die US 2003/0216513 A1 beschreibt ein Klebersystem, umfassend zwei miteinander mischbare polymerisierbare Komponenten, wobei die erste Komponente ein farbgebendes Mittel beinhaltet, die zweite Komponente hingegen nicht.

Die DE 295 08 712 A1 beschreibt einen Strukturkleber auf der Basis von kalthärtenden Zweikomponenten-Polyesterharzen oder kalthärtenden Zweikomponenten-Epoxidharzen, dem zur Farbgebung Pigmente zugesetzt werden. Ein derartiger Strukturkleber weist jedoch den Nachteil auf, daß für die verschiedenen zu verbindenden Werkstoffe jeweils ein speziell farblich angepaßter Strukturkleber in der entsprechenden Farbe bereitgestellt werden muß. Aufgrund der raschen Verfestigung der vorgefärbten Kleber ist ein Mischen der fertigen verschiedenfarbigen vorgefärbten Kleber nicht möglich. Ferner werden bei herkömmlichen Klebersystemen zur Einfärbung Farbpasten mit einer sehr hohen Konzentration an Farbstoffen zugesetzt, die ein Bereitstellen von Klebstoffen in definierten vorhersagbaren Farben mit geringer Farbintensität, insbesondere von Klebern verschiedener Grauabstufungen und/oder Beigeabstufungen, erschweren.

Es ist daher Aufgabe der vorliegenden Erfindung, ein Kleber-System bereitzustellen, welches die Herstellung von Klebern mit einem weiten Farbspektrum, vorzugsweise über das gesamte Farbspektrum, ermöglicht, wobei exakt definierte und reproduzierbare Farben erhalten werden können.

Die vorliegende Aufgabe wird durch ein Mehrfarbkomponenten-Klebersystem, gelöst, umfassend mindestens zwei miteinander mischbare polymerisierbare Komponenten, wobei jede der mindestens zwei miteinander mischbaren polymerisierbaren Komponenten eine oder mehrere polymerisierbare Verbindungen umfasst, ferner umfassend eine Härter-Komponente, welche getrennt von den mischbaren polymerisierbaren Komponenten vorliegt, und
a) wobei mindestens eine der miteinander mischbaren polimerisierbaren Komponenten kein farbgebendes Mittel umfasst und alle weiteren miteinander mischbaren polymerisierbaren Komponenten jeweils mindestens ein farbgebendes Mittel umfassen, oder
b) wobei die miteinander mischbaren polymerisierbaren Komponenten jeweils mindestens ein farbgebendes Mittel umfassen,
wobei die miteinander mischbaren polymerisierbaren Komponenten, welche mindestens ein farbgebendes Mittel umfassen, jeweils voneinander verschiedenfarbige farbgebende Mittel umfassen, und wobei die mischbaren polymerisierbaren Komponenten jeweils voneinander getrennt vorliegen.

Bei einer Ausführungsform des erfindungsgemäßen Mehrfarbkomponenten-Klebersystems umfaßt dieses vorzugsweise mindestens drei miteinander mischbare polymerisierbare Komponenten, die jeweils voneinander verschiedenfarbige farbgebende Mittel umfassen. Bei einer Ausführungsform des erfindungsgemäßen Mehrfarbkomponenten-Klebersystems umfaßt dieses vorzugsweise drei bis fünfzehn, weiter bevorzugt vier bis zehn, noch weiter bevorzugt fünf bis acht, miteinander mischbare polymerisierbare Komponenten, die jeweils voneinander verschiedenfarbige farbgebende Mittel umfassen. Vorzugsweise umfasst eine der miteinander mischbaren polymerisierbaren Komponenten kein farbgebendes Mittel.

Bei einer Ausführungsform sind die polymerisierbaren Verbindungen und ggf. die Härterkomponente im wesentlichen farblos, transparent, opaleszent, champagnerfarben lasierend und/oder weisen eine hellere Farbe als champagnerfarben lasierend auf. Hierdurch wird das Mischen beliebiger Farben erleichtert. Unter lasierend wird vorzugsweise verstanden, das die Farbe nicht deckend ist und darunterliegende Farben zumindestens teilweise sichtbar bleiben.

Bei einer Ausführungsform umfassen die miteinander mischbaren polymerisierbaren Komponenten, welche ein farbgebendes Mittel umfassen, jeweils unabhängig voneinander eine Konzentration des farbgebenden Mittels von 0,01 bis 10 Gew.-%, vorzugsweise 0,1 bis 3 Gew.- %, jeweils bezogen auf das Gesamtgewicht einer einzelnen miteinander mischbaren polymerisierbaren Komponente. Durch die geringe Konzentration an farbgebenden Mittel wird das Einstellen exakter Farben ermöglicht. Das Einstellen der reproduzierbarer Farben ist auch bei Wiederholungen der Mischung der polymeriserbaren Komponenten exakt möglich. Dies gilt insbesondere für die Herstellung heller Farben.

Der Begriff "jeweils unabhängig voneinander" bedeutet vorzugsweise, dass der zusätzlich zugesetzte Stoff in den einzelnen Komponenten in unterschiedlicher Konzentration enthalten sein kann.

Erfindungsgemäß umfasst das Mehrfarbkomponenten-Klebersystem ferner eine Härter-Komponente, welche getrennt von den mischbaren polymerisierbaren Komponenten vorliegt.

Durch das Mischen der verschiedenfarbigen mischbaren polymerisierbaren Komponenten wird die Bereitstellung einer polymerisierbaren Mischung vorzugsweise jeder beliebigen Farbe ermöglicht. Nach Zugabe einer Härter-Komponente zu der polymerisierbaren Mischung härtet der exakt farbangepasste Kleber aus. Zur Erleichterung des Einstellens des Mischungsverhältnisses der verschiedenfarbigen mischbaren polymerisierbaren Komponenten und des Härters können Mischungstabellen, die Angaben zu dem Mischungsverhältnissen der einzelnen Komponenten enthalten, bereitgestellt werden.

Bei einer bevorzugten Ausführungsform umfassen die miteinander mischbaren polymerisierbaren Komponenten und optional die Härter-Komponente ein Thixotropiermittel. Unter Thixothropiermitteln im Sinne der Erfindung sind vorzugsweise Stoffe zu verstehen, die ein Fließen der mischbaren polymerisierbaren Komponenten und/oder der Härter-Komponente weitgehend verhindern und dennoch eine Formbarkeit gewährleisten. Vorzugsweise sind die miteinander mischbaren polymerisierbaren Komponenten und/oder die Härter-Komponente pastös. Vorzugsweise ist das Thixotrophiermittel so ausgewählt, dass beim Auspressen der mischbaren polymerisierbaren Komponenten und optional der Härter-Komponente, beispielsweise aus Tuben und/oder Kartuschen, exakt definierte Volumenmengen erhalten werden.

Durch die Zugabe der Thixothropiermittel wird vorzugsweise eine sehr weiche, aber standfeste Konsistenz, vor allem für die Anwendung an senkrechten Flächen erreicht. Durch die Zugabe des Thixothropiermittels zu den polymerisierbaren Komponenten und optional zu der Härter-Komponente wird eine Konsistenz erreicht, welche eine exakte Dosierung der vorzugsweise pastösen polymerisierbaren Komponenten und optional der Härter-Komponente ermöglicht.

Als Thixothropiermitteln können bspw. pyrogene hydrophile und/oder hydrophobe Kieselsäuren, gehärtete oder nicht-gehärtete Rizinusölderivate, die optional mit Wachsen modifiziert wurden, Schichtsilikate und/oder organisch modifizierte Schichtsilikate, wie Bentonite, und/oder Polyamide verwendet werden. Bei einer Ausführungsform weisen die pyrogenen hydrophilen und/oder hydrophoben Kieselsäuren eine BET-Oberfläche von mehr als 50 m²/g, weiter bevorzugt von 100 m²/ bis 400 m²/g, auf. Vorzugsweise wird zu den Kieselsäuren zusätzlich ein OH-Gruppenhaltiges Additiv hinzugefügt, das die Ausbildung von Wasserstoffbrückenbindungen beschleunigt. Vorzugsweise umfassen die miteinander mischbaren polymerisierbaren Komponenten und/oder die Härter-Komponente jeweils unabhängig voneinander 0,5 bis 10 Gew.-%, vorzugsweise 2 bis 7 Gew.-%, Thixothropiermittel, bezogen auf das Gesamtgewicht der Komponente, der sie jeweils zugesetzt werden.

Bei einer Ausführungsform umfassen eine oder mehrere der miteinander mischbaren polymerisierbaren Komponenten und optional die Härter-Komponente mindestens einen UV-Stabilisator. Als UV-Stabilisatoren sind beispielsweise 2-(2-Hydroxyphenyl)-2H-benzotriazole, (2-Hydroxyphenyl)-S-triazine, Hydroxybenzophenone, Oxalanilide und/oder Mischungen davon geeignet. Durch die Zugabe von UV-Stabilisatoren kann ein Vergilben des Klebers, der auf der Basis des Mehrfarbkomponentensystems hergestellt werden kann, verhindert und/oder verzögert werden. Vorzugsweise umfassen die miteinander mischbaren polymerisierbaren Komponenten und/oder die Härter-Komponente jeweils unabhängig voneinander 0,1 bis 1,5 Gew.-% UV-Stabilisatoren bezogen auf das Gesamtgewicht der Komponente, der sie jeweils zugesetzt werden.

Vorzugsweise sind die mischbaren polymerisierbaren Verbindungen so gewählt, dass diese nach der Polymerisation Polymere ausgewählt aus der Gruppe, umfassend Polyesterharze, Acrylharze, Polyurethanharze, Epoxidharze, Vinylesterharze, Epoxyacrylate und/oder Mischungen davon, ergeben. Bei einer bevorzugten Ausführungsform werden als polymerisierbare Verbindungen ungesättigte Polyesterharze und/oder ungesättigte Polyacrylharze eingesetzt. Bei einer besonders bevorzugten Ausführungsform umfassen die polymerisierbaren Verbindungen in Styrolmonomeren gelöste ungesättigte Polyesterharze. Die Konzentration der Polyesterharze beträgt vorzugsweise 60 bis 70 Gew.-% bezogen auf das Gesamtgewicht der gelösten ungesättigten Polyesterharze und der Styrolmonomerlösung.

Als polymerisierbare Verbindungen können polymerisierbare Acrylharze auf der Basis von Polymerisaten der Monomere von Methylmethacrylat, Ethylmethacrylat, 1,4-Butandioldimethacrylat, Methacrylsäure, Methacrylamid, Methylacrylat, Ethylacrylat, n-Butylacrylat, 2-Hydroxyethylacrylat, Acrylsäure und/oder Glycidacrylat verwendet werden.

Als polymerisierbare Verbindungen können ungesättigte Polyesterharze, welche durch Polykondensation von Dicarbonsäuren mit Diolen hergestellt wurden, verwendet werden. Die Dicarbonsäuren können beispielsweise aus der Gruppe, umfassend Maleinsäure(anhydrid), Fumarsäure, Itaconsäure, Citraconsäure, Mesaconsäure, Chlormaleinsäure, o-Phthalsäure, Isophthalsäure, Terephthalsäure, Tetrahydrophthalsäure, Bernsteinsäure, Adipinsäure, Sebacinsäure und/oder Mischungen davon, ausgewählt werden. Die Diole können beispielsweise aus der Gruppe, umfassend Ethylenglykol, Diethylenglykol, Triethylenglykol, 1,2-Propylenglykol, Dipropylenglykol, 1,3-Butylenglykol, 1,4-Butandiol, 1,6-Hexandiol, Neopentylglycol, Glycerin, Trimethylpropan, Hexantriol-1.2.6, Pentaerytrit und/oder Mischungen davon, ausgewählt werden. Die Polykondensate werden vorzugsweise zur Einstellung der Viskosität in Reaktivverdünnern wie Styrol, Vinyltoluol, alpha-Methylstyrol, Diallylphthalat, Methacrylat, Methylmethacrylat, n-Butylmethacrylat, Acrylnitril und/oder Vinylacetat gelöst. Die Polyesterharze werden insbesondere im Innenbereich eingesetzt.

Als polymerisierbare Verbindungen können auch Vinylesterharze und/oder Epoxiacrylate verwendet werden, die durch Kondensation aus Acryl- und/oder Methacrylsäure mit Epoxiden, beispielsweise auf Basis von Bisphenol A, Bisphenol F und/oder Novolaken, herstellbar sind.

Als polymerisierbare Verbindungen können additionsvernetzende Polymere, wie beispielsweise Epoxidharzsysteme, eingesetzt werden. Beispielsweise werden aromatische Epoxidharze, wie Bisphenol-A, Bisphenol-F und/oder Diglycidylether, und/oder cycloaliphatische Epoxidharze, wie Vinylcyclohexendioxid, Hexahydrophthalsäurediglycidylester, Bis-(2,3-epoxicyclopentyl)-ether, Tetrahydrophthalsäurediglycidylester, und/oder Mischungen dieser eingesetzt. Ggf. können diese mit Reaktivverdünnern wie Butyl-glycidyl-ether, (C₁₂- bis C₁₅-Alkyl)-glycidyl-ether, (4-*tert*-Butylphenyl)-glycidyl-ether, Phenyl-glycidyl-ether; o-Kresylglycidyl-ether, Ethylenglycol-diglycidylether, Butan-1;4-diol-diglycidylether, Hexan-1,6-diol-diglycidylether, Polypropylenglycol-diglycidylether, Polybutylenglycoldiglycidylether, Neopentylenglycol-diglycidylether, Poly(tetrahydrofuran)-diglycidylether, 1,4-Cyclohexandimethanol-diglycidylether, Glycerol-triglycidylether, und/oder 1,1,1-Trimethylolpropan-triglycidylether verdünnt werden.

Die Kalthärtung von Epoxidharzsystemen erfolgt beispielsweise durch eine Härter-Komponente, wie beispielsweise ein Polyamin. Geeignete Polyamine sind beispielsweise Ethylendiamin, Diethylentriamin, Triethylentetramin, Isophorondiamin, m-Phenylendiamin, 4,4'-Diaminodiphenylmethan, deren Addukte, Polyaminoamide mit der allgemeinen Formel HO-(OC-R-CO-NH-R'-NH-)ₙ-H und/oder Mannich-Basen aus Phenolderivaten, vorzugsweise Bisphenole, wie beispielsweise Bisphenol A. Die Epoxidharzsysteme werden insbesondere im Außenbereich eingesetzt.

Als polymerisierbare Verbindungen können auch additionsvernetzende Polymere, wie beispielsweise Polyurethansysteme, eingesetzt werden. Als Harzkomponenten können Polyole auf Basis von Naturprodukten, wie beispielsweise Rizinusöl, und/oder synthetische Polyole, wie beispielsweise Polyester- und/oder Polyetherpolyole, eingesetzt werden. Als Härter-Komponenten können Diisocyanate der allgemeinen Formel O=C=N-R-N=C=O, wie beispielsweise 2,4- und /oder 2,6- Toluylendiisocyanat, Methylen-diphenyl-4,4'diisocyanat, Hexamethylendiisocyanat, Naphtylen-1,5-diisocyanat, und/oder Isophorondiisocyanat, eingesetzt werden.

Unter Härter-Komponente im Sinne der vorliegenden Erfindung sind vorzugsweise Substanzen zu verstehen, die die Polymerisation der polymerisierbaren Komponenten auslösen. Als Härter-Komponente können thermische Initiatoren, Redoxinitiatorsysteme und/oder photochemische Radikalbildner eingesetzt werden. Bei additionsvernetzene Systemen wird eine der beiden Komponenten als polymerisierende Komponente, die andere Komponente als Härter-Komponente bezeichnet. Die Härter-Komponente kann zusätzlich noch einen Weichmacher umfassen.

Bei einer Ausführungsform werden als Härter-Komponente, insbesondere bei der Polymerisation von Polyesterharzen und/oder Acrylharzen, Azoverbindungen, Härter wie beispielsweise Azo-bis(isobutyronitril), und/oder Peroxide, insbesondere Diarylperoxide, Dialkylperoxide und/oder Ketonperoxide, wie beispielsweise Dibenzoylperoxid, Dilaurylperoxid, Methylethylketonperoxid, Acetylacetonperoxid und/oder Cyclohexanonperoxid, eingesetzt. Als Redoxinitiatorsystem ist beispielsweise eine Mischung aus Eisen(III)acetylacetonat, Benzoin und/oder Benzildimethylketal geeignet. Bei einer Ausführungsform werden als photochemische Radikalbildner Benzoin und/oder Benzildimethylketal eingesetzt.

Das Gewichtverhältnis aller polymerisierbaren Komponenten zu der Härter-Komponente beträgt bei radikalisch und/oder ionisch vernetzenden Polymeren, wie Polyesterharzen und/oder Acrylharzen, vorzugsweise von 100:1 bis 100:4. Vorzugsweise umfasst die Härterkomponente 20 bis 60 Gew.-%, weiter bevorzugt 40 bis 60 Gew.-%, eines Härters und 40 bis 80 Gew.-%, weiter bevorzugt 40 bis 60 Gew.-%, eines anderen Stoffes, beispielsweise eines Weichmachers.

Das Gewichtverhältnis der polymerisierbaren Komponente zu der Härterkomponente beträgt bei additionsvernetzenden Polymeren, wie Epoxidharzen und/oder Polyurethanharzen, vorzugsweise von 1:1 bis 10:1, weiter bevorzugt 5:1.

Vorzugsweise beträgt die Konzentration der polymerisierbaren Verbindungen in einer polymerisierbaren Komponente 10 bis 98 Gew.-%, vorzugsweise 80 bis 95 Gew.-%, bezogen auf das Gesamtgewicht der polymerisierbaren Komponente.

Bei einer Ausführungsform umfassen die polymerisierbaren Verbindungen zusätzlich zu den vorstehend definierten Polymervorstufen zusätzlich 0,1 Gew.-% bis 90 Gew.-%, vorzugsweise 30 bis 40 Gew.-%, Reaktivverdünner, bezogen auf das Gesamtgewicht der polymerisierbaren Verbindungen. Unter Reaktivverdünnern im Sinne der vorliegenden Erfindung sind vorzugsweise polymerisierbare Monomere zu verstehen, die geeignet sind Polymere und/oder Vorstufen davon zu lösen. Bei einer Ausführungsform ist kein Reaktivverdünner in den polymerisierbaren Verbindungen enthalten.

Vorzugsweise werden keine UV-härtenden polymerisierbaren Verbindungen und/oder UV-Härter-Komponenten eingesetzt.

Bei einer Ausführungsform umfassen die mindestens zwei mischbaren polymerisierbaren Komponenten ferner einen oder mehrere Zusatzstoffe, ausgewählt aus der Gruppe, umfassend Reaktionsbeschleuniger, Haftvermittler, Stabilisatoren, Füllstoffe, Strukturstoffe, Trocknungsadditive, biozide Stoffe und/oder Mischungen davon. Die Stabilisatoren können auch als Polymerisations-Stabilisatoren bezeichnet werden.

Unter Reaktionsbeschleunigern im Sinne der Erfindung sind vorzugsweise Stoffe zu verstehen, die die Aushärtzeit des Klebers bei Raumtemperatur verkürzen. Vorzugsweise härtet der Kleber in einem Zeitraum von 15 bis 120 min, vorzugsweise von 30 bis 90 min, aus. Als Reaktionsbeschleuniger können aromatische Amine eingesetzt werden. Vorzugsweise weisen die armonatischen Amine 2 aliphatische Reste und einen aromatischen Rest auf. Als geeignet haben sich bspw.N,N-Dimethyl-p-toluidin, N,N-BisHydroxyethyl-p-toluidin und/oder N,N-Dimethylanilin, in monomerer und/oder kondensierter Form, erwiesen. Ferner können als Reaktionsbeschleuniger Metallsalze, bspw. Co- und/oder Vanadium-Salze, und/oder metallorganische Verbindungen, wie beispielsweise Co-Octoate, verwendet werden.

Unter Stabilisatoren im Sinne der Erfindung sind vorzugsweise Stoffe zu verstehen, die die Polymerisation der polymerisierbaren Verbindungen verzögern. Diese Stabilisatoren können auch als Polymerisations-Stabilisatoren bezeichnet werden. Dies ermöglicht eine verlängerte Lagerfähigkeit des erfindungsgemäßen Mehrfarbkomponentensystems.

Als Stabilisator bzw. Polymerisationsstabilisatoren können Phenole und/oder Chinone eingesetzt werden. Bspw. können als Stabilisatoren Hydrochinon, Toluhydrochinon, Brenzkatechin, tert.- Butylhydrochinon, 4-tert.-Butylbrenzkatechin, Hydrochinonmonomethylether, p-Benzochinön, Naphthochinon, 2,5-Di-tert.-Butylhydrochinon, 3,5-Di-tert.-Butylbrenzkatechin, Chloranilin und/oder Mischungen davon verwendet werden.

Unter Trocknungsadditiven im Sinne der Erfindung werden vorzugsweise Stoffe verstanden, die die Trocknungsgeschwindigkeit des Klebers beschleunigen. Dies wird dadurch erreicht, dass diese Trocknungsadditive insbesondere die Polymerisation an der Oberfläche des Klebers beschleunigen. Als Trocknungsadditive können bspw. Paraffine, synthetische Derivate davon, und/oder Sikative, wie Co-Octoat, verwendet werden. Vorzugsweise umfassen die miteinander mischbaren polymerisierbaren Komponenten und/oder die Härter-Komponente jeweils unabhängig voneinander 0,1 bis 1,5 Gew.-% Trocknungsadditive, bezogen auf das Gesamtgewicht der Komponente, der sie jeweils zugesetzt werden.

Unter Haftvermittlern im Sinne der vorliegenden Erfindung werden vorzugsweise Stoffe verstanden, die die Haftung des Klebers, der aus dem Mehrfarbkomponenten-Klebersystem herstellbar ist, an die zu verbindenden Substrate, verbessern. Bei einer Ausführungsform des erfindungsgemäßen Mehrfarbkomponenten-Klebersystems umfassen die polymerisierbaren Komponenten jeweils unabhängig voneinander 0,1 bis 5 Gew.-%, vorzugsweise 0,5 Gew.-% bis 2,5 Gew.-%, Haftvermittler, bezogen auf das Gesamtgewicht jeweils der einzelnen polymerisierbaren Komponente, der sie jeweils zugesetzt werden. Alternativ kann das erfindungsgemäße Mehrfarbkomponentensystem auch eine zusätzlich Haftvermittler-Komponente umfassen, die getrennt von den mindestens zwei polymerierbaren Komponenten und der Härter-Komponente vorliegt. In diesem Fall wird die Haftvermittler-Komponente vor der Verklebung direkt auf die zu verklebenden Substarte aufgetragen. Vorzugsweise werden als Haftvermittler Organosilane eingesetzt.

Bei einer Ausführungsform des erfindungsgemäßen Mehrfarbkomponenten-Klebersystems werden Methacryloxysilane, Vinylsilane, Epoxysilane, Aminosilane und/oder Isocyanatosilane als Haftvermittler eingesetzt.

Für die einzelnen Systeme der polymerisierbaren Verbindungen eignen sich vorzugsweise folgende Haftvermittler:
a) Bei einer Ausführungsform werden ungesättigte Polyesterharze, Acrylatharze, Vinylesterharze und/oder Epoxyacrylate als polymerisierbare Verbindungen in Kombination mit Haftvermittlern, wie Methacryloxysilanen und/oder Vinylsilanen, eingesetzt. Beispielsweise können als Haftvermittler Vinyltriethoxysilan, Vinyltris(2-methoxyethoxy)silan, Vinyltrimethoxysilan, Vinylmethyldimethoxysilan, Vinyltriacetoxysilan, (3-Methacryloxypropyl)trimethoxysilan, (Methacryloxymethyl)methyldimethoxysilan, (Methacryloxymethyl)trimethoxysilan und/oder (Methacryloxymethyl)methyldiethoxysilan, eingesetzt werden.
b) Bei einer Ausführungsform werden Epoxydharzsysteme als polymerisierbare Verbindungen in Kombination mit Haftvermittlern, wie Epoxysilanen, eingesetzt. Beispielsweise können beta-(3.4-Epoxycyclohexyl)ethyltrimethoxysilan, gamma-Glycidoxypropyltrimethoxysilan, (3-Glycidoxypropyl)trimethoxysilan und/oder (3-Glycidoxypropyl)triethoxysilan als Haftvermittler eingesetzt werden.
   Bei einer Ausführungsform werden Aminhärter in Kombination mit Aminosilanen als Haftvermittler eingesetzt. Beispielsweise können N-(2-Aminoethyl)(3-Aminopropyl)trimethoxysilan, (3-Aminopropyl)trimethoxysilan, N-(2-Aminoethyl)(3-Aminopropyl)methyldimethoxysilan, und/oder (3-Aminopropyl)triethoxysilan als Haftvermittler eingesetzt werden.
c) Bei einer Ausführungsform werden bei Polyurethansysteme die Polyolkomponenten in Verbindung mit Aminosilanen als Haftvermittler eingesetzt. Beispielsweise können N-(2-Aminoethyl)(3-Aminopropyl)trimethoxysilan, (3-Aminopropyl)trimethoxysilan, N-(2-Aminoethyl)(3-Aminopropyl)methyldimethoxysilan, und/oder (3-Aminopropyl)triethoxysilan als Haftvermittler eingesetzt werden.

Bei einer Ausführungsform werden bei Polyurethansysteme die Isocyanatkomponenten in Verbindung mit Isocyanatosilanen als Haftvermittler eingesetzt. Beispielsweise können (isocyanatomethyl)methyldimethoxysilan und/oder (isocyanatomethyl)trimethoxysilan als Haftvermittler eingesetzt werden.

Bei einer weiteren Ausführungsform der Erfindung werden die Füllstoffe und/oder Strukturstoffe aus der Gruppe, umfassend Carbonate, insbesondere Calciumcarbonat und/oder Magnesiumcarbonat, Talkum, Tone, Kieselgur, Kieselerde, Calzit, Dolomit, Quarzmehl, Aluminiumoxid, Aluminiumhydroxid, Kaolin, Glimmer, Perlglanzpigmente, Metalleffektpigmente, Calciumsulfat, Bariumsulfat, Glasfasern, Glaskugeln, Holzmehl, Cellulose-Pulver und/oder Mischungen davon ausgewählt. Unter Strukturstoffen im Sinne der Erfindung sind Stoffe und/oder Verbindungen zu verstehen, die eine optische Anpassung des Klebers an die sichtbaren Strukturen der zu verbindenden Gegenstände, insbesondere die zu verbindenden Kunst- oder Natursteine, ermöglichen. Mit dem erfindungsgemäßen Mehrfarbkomponentensystem lassen sich farbangepasste Kleber herstellen, die insbesondere zum Verbinden von natürlichen mineralischen Substraten und/oder künstlichen Substraten mit mineralische Optik geeignet sind.

Vorzugsweise liegt die Partikelgröße der Füllstoffe in einem Bereich von 0,1 bis 200 µm, weiter bevorzugt von 1 bis 50 µm.

Vorzugsweise liegt die Partikelgröße der Strukturstoffe in einem Bereich von 100 bis 1000 µm, weiter bevorzugt von 250 bis 900 µm. Bei einer Ausführungsform liegen die Strukturstoffe in Plätchenform vor. Das Verhältnis von Länge zur Breite der Plättchen liegt vorzugsweise bei 1:4 bis 1:8.

Die mischbaren polymerisierbaren Komponenten umfassen vorzugsweise jeweils unabhängig voneinander 1 bis 70 Gew.-%, weiter bevorzugt 10 bis 65 Gew.-%, Strukturstoffe und/oder Füllstoffe, bezogen auf das Gesamtgewicht der mischbaren polymerisierbaren Komponente, der sie jeweils zugesetzt werden.

Unter bioziden Stoffen sind vorzugsweise Stoffe zu verstehen, die das Wachstum von Mikroorganismen, insbesondere von Bakterien, Einzellern und/oder Viren verhindern und/oder diese abtöten. Als biozide Stoffe können beispielsweise Znhaltige, Ag-haltige, Sn-haltige Verbindungen und/oder 2,4,4'-Trichlor-2'-Hydroxydiphenylether, Benzalkoniumchchlorid und/oder Mischungen davon eingesetzt werden. Durch die bioziden Stoffe wird eine erhebliche Hygienewirkung erzielt. Vorzugsweise umfassen die miteinander mischbaren polymerisierbaren Komponenten und/oder die Härter-Komponente jeweils unabhängig voneinander 0,1 bis 1,5 Gew.-% biozide Stoffe bezogen auf das Gesamtgewicht der Komponente, der sie jeweils zugesetzt werden.

Bei einer Ausführungsform weisen die miteinander mischbaren polymerisierbaren Komponenten Farben, ausgewählt aus der Gruppe, umfassend farblos, transparent, opalescent, champagnerfarben lasierend, weiß, schwarz, gelb, grün, rot, blau, braun, grau, beige und/oder Mischungen davon auf.

Als farbgebende Mittel können anorganische, insbesondere mineralische, und/oder organische Farbmittel verwendet werden. Bei einer Ausführungsform umfassen die miteinander mischbaren polymerisierbaren Komponenten jeweils unabhängig voneinander 0,01 bis 10 Gew.-%, vorzugsweise 0,1 bis 3 Gew.- %, farbgebende Mittel, bezogen auf das Gesamtgewicht der mischbaren polymerisierbaren Komponente, der sie jeweils zugesetzt werden. Die mischbaren polymerisierbaren Komponenten umfassen die farbgebenden Mittel vorzugsweise in homogener Verteilung.

Die anorganischen Farbmittel können bspw. aus der Gruppe, umfassend Kreide, Titandioxid, Eisenoxid, Chromoxid, Kobaltoxid, Russ, Ocker, Grünerde, Chrom-Gelb, Mennige, Ultramarin, Umbra, Graphit, Bismutvanadat, Zinkoxid, Lithopone, Metalleffektpigmente, Perlglanzpigmente, und/oder Mischungen davon, ausgewählt werden.

Als organische Farbmittel können organische Pigmente und/oder organische Farbstoffe eingesetzt werden.

Bei einer Ausführungsform des erfindungsgemäßen Mehrkomponenten-Klebersystems werden die organischen Pigmente aus der Gruppe ausgewählt, umfassend Azofarbstoff-Pigmente, Anthrachinon-Pigmente, Chinophthalon-Pigmente, Isoindolin-Pigmente, Naphthalintetracarbonsäure-Pigmente, Indigoide, Dioxazin-Pigmente, Chinacridon-Pigmente, Phthalocyanin-Pigmente, Isoindolinon-Pigmente, Perylen-Pigmente, Perinon-Pigmente, organische Metallkomplex-Pigmente, Alkaliblau-Pigmente, Diketopyrrolopyrrol-Pigmente und/oder Mischungen davon.

Bei einer Ausführungsform des erfindungsgemäßen Mehrkomponenten-Klebersystems werden die organischen Farbstoffe aus der Gruppe ausgewählt sind, umfassend Azo-Farbstoffe, Azin-Farbstoffe, Anthrachinon-Farbstoffe, Acridin-Farbstoffe, Alkaloid-Farbstoffe, Cyanin-Farbstoffe, Phenoxazin-Farbstoffe, Polymethin-Farbstoffe, Thiazin-Farbstoffe, Triarylmethan-Farbstoffe, Anilinblau, Anilinschwarz, Anthracenblau, Bismarckbraun, 2,4-Diaminoazobenzol, Cibablau, Fuchsin, Hydronblau, Immedialschwarz, Kongorot, Kristallviolett, Malachitgrün, Methylenblau, Methylorange, Methylviolett, Variamin-Blau, Viktoriablau-Farbstoffe und/oder Mischungen davon.

Die Farbmittel können in gelöster oder partikulärer Form verwendet werden. Bei einer Ausführungsform weisen die farbgebenden Mittel eine Korngröße in einem Bereich von 10 nm bis 100 µm, vorzugsweise 0,1 bis 10 µm, auf.

Bei einer besonders bevorzugten Ausführungsform liegen die mindestens zwei mischbaren polymerisierbaren Komponenten, die Härter-Komponente und/oder Haftvermittler-Komponente jeweils in getrennten Aufbewahrungseinheiten, beispielsweise in Kartuschen, Tuben und/oder Dosen, vor. Vorzugsweise handelt es sich um diffusionsdichte Tuben, die beispielsweise mit Aluminium beschichtet wurden. Vorzugsweise weisen die Aufbewahrungseinheiten Öffnungen zum Auspressen der mischbaren polymerisierbaren Komponenten und/oder der Härter-Komponente auf, welche beim Auspressen Stränge mit gleichbleibenden Durchmessern erzielen. Die Öffnung der Tuben und/oder der Kartuschen sind daher vorzugsweise so ausgestaltet, dass eine reproduzierbare Volumenmenge der mindestens zwei mischbaren polymerisierbaren Komponenten und/oder der Härter-Komponente durch Auspressen eines Stranges mit einer definierten Länge erhalten werden kann. Hierdurch kann wiederholgenau jede beliebige Farbeinstellung erzielt werden.

Bei einer Ausführungsform umfasst das Mehrfarbkomponenten-Klebersystem ferner eine Dosierhilfe zum Abmessen der mindestens zwei mischbaren polymerisierbaren Komponenten, der Härter-Komponente und/oder der Haftvermittlerkomponente.

Bei einer Ausführungsform umfasst das Mehrfarbkomponenten-Klebersystem als Dosierhilfe ein skaliertes Meßbrett, eine skalierte Meßfolie, ein skaliertes Meßpapier, eine skalierte Tube, eine skalierte Kartusche, einen Meßbecher und/oder einen Meßzylinder.

Das erfindungsgemäße Mehrfarbkomponenten-Klebersystem kann bspw. zum Herstellen eines Klebers als Klebermasse, Fugenmasse, Ausbesserungsmaterial und/oder Ausfüllmaterial für mineralische Substrate, wie beispielsweise Natursteine, Kunststeine, Keramik, Steingut, Porzellan, Metalle und/oder Holz verwendet werden. Die Verwendung von mit Farbmittel versehenen polymerisierbaren mischbaren Komponenten, die optional zusätzlich Strukturstoffe enthalten können, ermöglicht eine optimale optische Anpassung des Klebers an praktisch jeden beliebigen Kunststein, Naturstein, Keramik, Steingut, Porzellan und/oder Holz.

Bei den Kunst- und/oder Natursteinen handelt es sich vorzugsweise um Küchenarbeitsplatten und/oder Fensterbänke.

Ferner kann der Kleber verwendet werden, um die Oberfläche, insbesondere von Natursteinen, auszubessern und/oder auszufüllen. Vorzugsweise kann der Kleber nach dem Aushärten abgeschliffen und poliert werden.

Das erfindungsgemäße Mehrfarbkomponenten-Klebersystem ermöglicht die Herstellung eines Klebers mit Haft- und/oder Klebstoffeigenschaften. Der Kleber mit Haft- und/oder Klebstoffeigenschaften kann vorzugsweise zusammengefügte Teile durch Flächenhaftung zuverlässig miteinander verbinden. Vorzugsweise ist der Klebstoff wasserbeständig. Bei einer Ausführungsform ist der Kleber bis zu Temperaturen von unter 100°C, vorzugsweise unter 150°C, am meisten bevorzugt unter 250 °C beständig, und/oder gegenüber Laugen und/oder Säuren beständig.

Die Biegefestigkeit des nach Vermischen der polymerisierbaren Komponenten und der Härter-Komponente erhaltenen und farbangepassten Klebers liegt vorzugsweise in einem Bereich von 100 bis 110 N/mm². Die Biegefestigkeit kann gemäß der DIN-Norm 53452 bestimmt werden.

Die Zugfestigkeit des nach Vermischen der polymerisierbaren Komponenten und der Härter-Komponente erhaltenen und farbangepassten Klebers liegt vorzugsweise in einem Bereich von 40 bis 50 N/mm². Die Zugfestigkeit kann gemäß der DIN-Norm 53455 bestimmt werden.

Eine Ausführungsformen des erfindungsgemäßen Mehrfarbkomponentenklebersystems umfasst:
a) eine transparente polymerisierbare Komponente, umfassend
   85 bis 98 Gew.% polymerisierbare Verbindungen
   2 bis 10 Gew.% Thixothropiermittel
   0,1 bis 1,5 Gew.% UV-Stabilisator
   0,1 bis 1,5 Gew.% biozide Stoffe
   0,1 bis 1,5 Gew.% Trocknungsadditiv, und/oder
b) eine oder mehrere gefärbte polymerisierbare Komponenten ohne Füll- oder Strukturstoffe, umfassend
   85 bis 95 Gew.% polymerisierbare Verbindungen
   2 bis 10 Gew.% Thixothropiermittel
   0,1 bis 10 Gew.% farbgebende Mittel
   0,1 bis 1,5 Gew.% UV-Stabilisator
   0,1 bis 1,5 Gew.% biozide Stoffe
   0,1 bis 1,5 Gew.% Trocknungsadditiv, und/oder
c) eine oder mehrere gefärbte polymerisierbare Komponenten mit Füll- und Strukturstoffen, umfassend
   10 bis 85 Gew.% polymerisierbare Verbindungen
   0,5 bis 5 Gew.% Thixothropiermittel
   0,1 bis 10 Gew.% farbgebende Mittel
   0,1 bis 1,5 Gew.% UV-Stabilisator
   0,1 bis 1,5 Gew.% biozide Stoffe
   1 bis 70 Gew.% Füll- und Strukturstoffe
   0,1 bis 1,5 Gew.% Trocknungsadditiv, und/oder
d) eine Härter-Komponente, umfassend
   20 bis 60 Gew.% Organisches Peroxid
   40 bis 80 Gew.% Weichmacher,
wobei die polymerisierbaren Verbindungen vorzugsweise einen Reaktivverdünneranteil von 30 bis 40 Gew.-% bezogen auf das Gesamtgewicht der polymerisierbaren Verbindungen aufweisen.

Das Verfahren zum Herstellen eines farbangepassten Klebers, umfasst die folgenden Schritte:
a) Bereitstellen eines Mehrfarbkomponenten-Klebersystems nach einem der Ansprüche 1 bis 13,
b) Mischen von mindestens zwei mischbaren polymerisierbaren Komponenten des Mehrfarbkomponenten-Klebersystems zu einer gewünschten Farbgebung und
c) Zumischen mindestens einer Härter-Komponente.

Bei einer Ausführungsform des erfindungsgemäßen Verfahrens wird die gewünschte Farbgebung in Schritt b) dadurch erhalten, daß in Schritt b) eine definierte Menge von mindestens 2 der mischbaren polymerisierbaren Komponenten, vorzugsweise in Form eines Stranges mit einem konstanten Durchmesser und einer definierten Länge, bereitgestellt und diese nachfolgend miteinander vermischt werden. Die erhaltene Mischungen werden anschließend vorzugsweise ebenfalls mit einer definierten Menge der Härter-Komponente vermischt. Vorzugsweise werden die definierten Mengen an polymerisierbaren Komponenten und/oder der Härter-Komponente mit der oben beschriebenen Dosierhilfe abgemessen.

Beispielsweise kann die definierte Menge von mindestens 2 der mischbaren polymerisierbaren Komponenten und/oder der Härter-Komponente durch Auspressen der Stränge aus einer Kartusche und/oder Tube, vorzugsweise auf ein Meßbrett und/oder Meßfolie, erhalten werden. Bei einer Ausführungsform werden skalierte Kartuschen und/oder Tuben als Dosierhilfe verwendet. Die Länge des Stranges kann durch die Skalierung bestimmt werden. Durch das Abmessen der Stränge mit einer skalierten Dosierhilfe kann die Menge der einzelnen mischbaren, polymerisierbaren Komponenten exakt bestimmt werden. Dies ermöglicht eine reproduzierbare Bereitstellung von exakt eingefärbten Klebern in jeder beliebigen Farbnuance.

Bei einer Ausführungsform beträgt der Durchmesser der Öffnungen der Tuben und/oder der Kartuschen 7 bis 10 mm für die polymerisierbaren Komponenten und 2 bis 5 mm für die Härter-Komponente, falls ein Polymerisatinsinitiator als Härter-Komponente für eine radikalische oder ionische Polymerisation eingesetzt wird. Bei der Herstellung von Additionspolymeren beträgt der Durchmesser der Öffnungen der Tuben und/oder der Kartuschen vorzugsweise 7 bis 10 mm für die polymerisierbaren Komponenten und vorzugsweise für die Härter-Komponente ebenfalls 7 bis 10 mm.

Vorzugsweise sind die mindestens zwei mischbaren polymerisierbaren Komponenten und/oder die Härter-Komponente durch Verspachteln und/oder Verrühren ohne Einsatz von weiteren technischen Hilfsmitteln mischbar.

Der mit dem erfindungsgemäßen Mehrfarbkomponenten-Klebersystem herstellbare Kleber ermöglicht vorzugsweise die reproduzierbare Herstellung jeder beliebigen Farbe und zeichnet sich ferner durch eine gute Verarbeitbarkeit, schnelle Aushärtung im Bereich von 30 bis 90 min, gute Polierfähigkeit, gute Haftung auch bei erhöhten Temperaturen und/oder Beständigkeit gegen Wasser, Benzin und/oder Mineralöle aus.

Die nachfolgende Figur und Beispiele dienen lediglich der Veranschaulichung der Erfindung, beschränken jedoch nicht den Schutzumfang der Erfindung.

### Figur

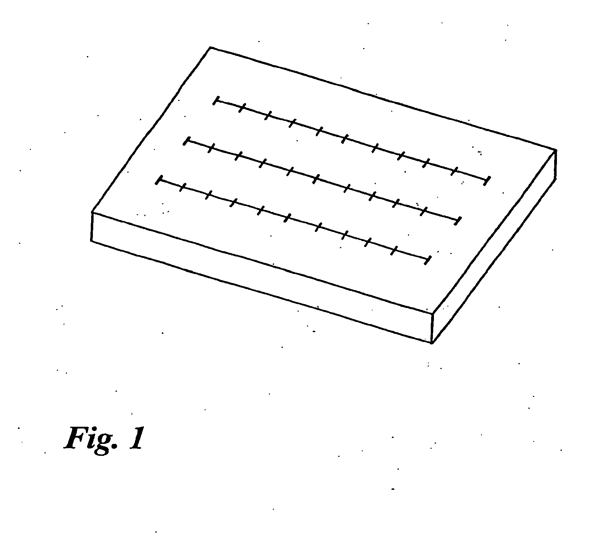

Figur 1 zeigt eine Dosierhilfe in Form eines skaliertes Meßbrettes zum Bestimmen einer definierten Menge der mischbaren polymerisierbaren Komponenten und/oder der Härter-Komponente.

### Beispiel

Das nachfolgende Beispiel soll die Erfindung näher erläutern, aber in keiner Weise beschränken.

Herstellung der transparenten mischbaren polymerisierbaren Komponente: 400 g in Styrol gelöstes ungesättigtes Polyesterharz wird mit 22 g Thixothropiermittel, 2 g UV-Stabilisator, 1,3 g 2,4,4'-Trichlor-2'-hydroxyphenyl-ether und 1 g Paraffin gemischt und in einem Hochleistungsrührwerk dispergiert und anschließend evakuiert.

Herstellung der gefärbten mischbaren polymerisierbaren Komponenten: 395 g in Styrol gelöstes ungesättigtes Polyesterharz wird mit 22 g Thixothropiermittel, 2 g UV-Stabilisator, 1,3 g 2,4,4'-Trichlor-2'-hydroxyphenyl-ether, x g farbgebendes Mittel und 1 g Paraffin gemischt und in einem Höchleistungsrührwerk dispergiert und anschließend evakuiert.

Die verschiedenen gefärbten mischbaren polymerisierbaren Komponente werden durch Zugabe von verschiedenen farbgebenden Mitteln erhalten. Nachfolgend sind einige Beispiele angegeben.

### Härter-Komponente:

50 Gew.% Dibenzoylperoxid (BPO) in Weichmacher

### Konfektionierung:

Die mischbaren polymerisierbaren Komponenten und die Härter-Komponente werden in diffusionsdichte Tuben mit einer Aluminiumbeschichtung gefüllt. Die Tuben für die mischbaren polymerisierbaren Komponenten weisen eine Tubenöffnung von 7,8 mm auf. Die Tube für die Härter-Komponente weist eine Tubenöffnung von 4,1 mm auf.

Die nachfolgenden Tabellen enthalten Rezepturen für verschiedene Farben der mischbaren polymerisierbaren Komponenten. Als Thixothropiermittel und UV-Stabilisatoren können die vorstehend beschriebenen Stoffe eingesetzt werden.

### Mischfarbe transparent

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxydiphenyl-ether | 1,3 g |
| Paraffin | 1 g |

### Mischfarbe Weiß

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxydiphenyl-ether | 1,3 g |
| Titandioxid | 11,4 g |
| Paraffin | 1 g |

### Mischfarbe Schwarz

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxydiphenyl-ether | 1,3 g |
| Eisenoxidschwarz | 2,28 g |
| Paraffin | 1 g |

### Mischfarbe Gelb

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxydiphenyl-ether | 1,3 g |
| Eisenoxidgelb | 1,47 g |
| Paraffin | 1 g |

### Mischfarbe Braun

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxydiphenyl-ether | 1,3 g |
| Eisenoxidbraun | 1,96 g |
| Paraffin | 1 g |

### Mischfarbe Rot

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxydiphenyl-ether | 1,3 g |
| Pigmentrot | 0,49 g |
| Paraffin | 1 g |

### Mischfarbe Grün

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxydiphenyl-ether | 1,3 g |
| Chromoxidgrün | 2,28 g |
| Paraffin | 1 g |

### Mischfarbe Blau

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxydiphenyl-ether | 1,3 g |
| Ultramarinblau | 2,13 g |
| Paraffin | 1 g |

### Mischfarbe Olivbraun

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxydiphenyl-ether | 1,3 g |
| Titandioxid | 3,185 g |
| Eisenoxidschwarz | 0,69 g |
| Eisenoxidgelb | 0,275 g |
| Eisenoxidbraun | 0,5 g |
| Chromoxidgrün | 0,215 g |
| Paraffin | 1 g |

### Mischfarbe Altweiß

| | |
|---|---|
| in Styrol gelöstes ungesättigtes Polyesterharz (65 Gew.-% Polyesterharz bezogen auf das Gesamtgewicht der Polyesterharzlösung) | 380 g |
| Thixothropiermittel | 22 g |
| UV-Stabilisator | 2,15 g |
| 2,4,4'-Trichlor-2'-hydroxydiphenyl-ether | 1,3 g |
| Titandioxid | 10,875 g |
| Eisenoxidschwarz | 0,032 g |
| Paraffin | 1 g |

### Mischfarbe Braunbeige

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxydiphenyl-ether | 1,3 g |
| Titandioxid | 1,725 g |
| Eisenoxidgelb | 0,18 g |
| Eisenoxidbraun | 0,155 g |
| Chromoxidgrün | 0,055 g |
| Ultramarinblau | 0,045 g |
| Paraffin | 1 g |

### Mischfarbe Dunkelgrau

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxydiphenyl-ether | 1,3 g |
| Titandioxid | 4,455 g |
| Eisenoxidschwarz | 0,91 g |
| Paraffin | 1 g |

### Mischfarbe Hellgrau

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxydiphenyl-ether | 1,3 g |
| Titandioxid | 4,455 g |
| Eisenoxidschwarz | 0,265 g |
| Paraffin | 1 g |

### Mischfarbe Hellbeige

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxyphenyl-ether | 1,3 g |
| Titandioxid | 8,765 g |
| Eisenoxidgelb | 0,065 g |
| Eisenoxidbraun | 0,075 g |
| Chromoxidgrün | 0,037 g |
| Paraffin | 1 g |

### Mischfarbe Dunkelbeige

| | |
|---|---|
| in Styrol gelöstes ungesättigtes Polyesterharz (65 Gew.-% Polyesterharz bezogen auf das Gesamtgewicht der Polyesterharzlösung) | 390 g |
| Thixothropiermittel | 22 g |
| UV-Stabilisator | 2,15 g |
| 2,4,4'-Trichlor-2'-hydroxyphenyl-ether | 1,3 g |
| Titandioxid | 8,76 g |
| Eisenoxidschwarz | 0,088 g |
| Eisenoxidgelb | 0,093 g |
| Eisenoxidbraun | 0,107 g |
| Chromoxidgrün | 0,055 g |
| Paraffin | 1 g |

Mischungsbeispiele für angepasste Farbmischungen für Arbeitsplatten ZODIAQ^{®} Quartz Surfaces von DuPont^{®}:

Zur Herstellung eines farbangepassten Klebers für verschiedene Arbeitsplatten werden aus den Tuben Stränge mit den unten angegebenen Längen gepresst.
a) Caroli Red

| | |
|---|---|
| Mischfarbe Rot | 15 cm |
| Mischfarbe Blau | 2 cm |
| Mischfarbe Schwarz | 1 cm |
| Härterpaste 50 % BPO | 1,8 cm |

b) Vela Brown

| | |
|---|---|
| Transparent | 25 cm |
| Mischfarbe Braun | 2 cm |
| Mischfarbe Schwarz | 1 cm |
| Härterpaste 50 % BPO | 2,8 cm |

c) Eclipse Blue

| | |
|---|---|
| Transparent | 14 cm |
| Mischfarbe Blau | 12 cm |
| Mischfarbe Schwarz | 8 cm |
| Härterpaste 50 % BPO | 3,4 cm |

Zunächst werden aus den Tuben mit den verschiedenfarbigen polymerisierbaren Komponenten Farbstränge entsprechend den vorstehenden Angaben ausgepresst. Die Länge der Stränge wird durch das Auspressen auf ein skaliertes Messbrett bestimmt. Die polymerisierbaren Komponenten werden vermischt. Es wird eine farblich genau definierte Mischung der polymerisierbaren Komponenten erhalten. Aus der Tube mit der Härter-Komponente wird entsprechend den vorstehenden Angaben ebenfalls ein Strang auf das skalierte Messbrett ausgepresst. Die Mischung der polymerisierbaren Komponenten und die Härter-Komponente werden vermischt.

Die Mischung bleibt 7 bis 16 Minuten verarbeitungsfähig und härtet nach ca. 30 bis 90 Minuten bei 20 °C aus.

Der ausgehärtete Kleber erreicht folgende mechanische Eigenschaften:

| | |
|---|---|
| Biegefestigkeit: | 100 bis 110 n/mm² |
| Zugfestigkeit: | 40 bis 50 N/mm² |

## Patentansprüche

1. Mehrfarbkomponenten-Klebersystem, umfassend
mindestens zwei miteinander mischbare polymerisierbare Komponenten, wobei jede der mindestens zwei miteinander mischbaren polymerisierbaren Komponenten eine oder mehrere polymerisierbare Verbindungen umfasst, ferner umfassend eine Härter-Komponente, welche getrennt von den mischbaren polymerisierbaren Komponenten vorliegt, und
a) wobei eine der miteinander mischbaren polymerisier baren Komponenten kein farbgebendes Mittel umfasst und alle weiteren miteinander mischbaren polymerisierbaren Komponenten jeweils mindestens ein farbgebendes Mittel umfassen, oder
b) wobei die miteinander mischbaren polymerisierbaren Komponenten jeweils mindestens ein farbgebendes Mittel umfassen,
wobei die miteinander mischbaren polymerisierbaren Komponenten, welche mindestens ein farbgebendes Mittel umfassen, jeweils voneinander verschiedenfarbige farbgebende Mittel umfassen, und wobei die mischbaren polymerisierbaren Komponenten jeweils voneinander getrennt vorliegen.

2. Mehrfarbkomponenten-Klebersystem nach Anspruch 1, wobei jede der mindestens zwei miteinander mischbaren polymerisierbaren Komponenten und optional die Härterkomponente mindestens ein Thixotropiermittel umfassen.

3. Mehrfarbkomponenten-Klebersystem nach einem der vorhergehenden Ansprüche, wobei die polymerisierbaren Verbindungen und die Härter-Komponente im wesentlichen farblos , transparent, opaleszent, champagnerfarben lasierend sind und/oder ein hellere Farbe wie champagnerfarben lasierend aufweisen.

4. Mehrfarbkomponenten-Klebersystem nach einem der vorhergehenden Ansprüche, wobei mindestens eine der miteinander mischbaren polymerisierbaren Komponenten und/oder die Härter-Komponente mindestens einen UV-Stabilisator umfassen.

5. Mehrfarbkomponenten-Klebersystem nach einem der vorhergehenden Ansprüche, wobei mindestens eine der miteinander mischbaren polymerisierbaren Komponenten und/oder die Härter-Komponente mindestens ein biozides Mittel umfassen.

6. Mehrfarbkomponenten-Klebersystem nach einem der vorhergehenden Ansprüche, wobei die polymerisierbaren Verbindungen nach der Polymerisation ein Polymer ergeben, welches aus der Gruppe ausgewählt ist, umfassend
Polyesterharze, Acrylharze, Polyurethanharze, Epoxyharze, Vinylesterharze, Epoxyacrylate und/oder Mischungen davon.

7. Mehrfarbkomponenten-Klebersystem nach einem der vorhergehenden Ansprüche, wobei die farbgebenden Mittel anorganische und/oder organische Farbmittel sind.

8. Mehrfarbkomponenten-Klebersystem nach Anspruch 7, wobei die anorganischen Farbmittel aus der Gruppe ausgewählt sind, umfassend Kreide, Titandioxid, Eisenoxid, Chromoxid, Kobaltoxid, Russ, Ocker, Grünerde, Chrom-Gelb, Mennige, Ultramarin, Umbra, Graphit, Bismutvanadat, Zinkoxid, Lithopone, Metalleffektpigmente, Perlglanzpigmente und/oder Mischungen davon.

9. Mehrfarbkomponenten-Klebersystem nach Anspruch 7, wobei die organischen Farbmittel aus der Gruppe der organischen Pigmente ausgewählt sind, umfassend
Azofarbstoff-Pigmente, Anthradhinon-Pigmente, Chinophthalon-Pigmente, Isoindolin-Pigmente, Naphthalintetracarbonsäure-Pigmente, Indigoide, Dioxazin-Pigmente, Chinacridon-Pigmente, Phthalocyanin-Pigmente, Isoindolinon-Pigmente, Perylen-Pigmente, Perinon-Pigmente, organische Metallkomplex-Pigmente, Alkaliblau-Pigmente, Diketopyrrolopyrrol-Pigmente und/oder Mischungen davon.

10. Mehrfarbkomponenten-Klebersystem nach Anspruch 7, wobei die organischen Farbmittel aus der Gruppe der organischen Farbstoffe ausgewählt sind, umfassend
Azo-Farbstoffe, Azin-Farbstoffe, Anthrachinon-Farbstoffe, AcridinFarbstoffe, Alkaloid-Farbstoffe, Cyanin-Farbstoffe, Phenoxazin-Farbstoffe, Polymethin-Farbstoffe, Thiazin-Farbstoffe, Triarylmethan-Farbstoffe, Anilinblau, Anilinschwarz, Anthracenblau, Bismarckbraun, 2,4-Diaminoazobenzol, Cibablau, Fuchsin, Hydronblau, Immedialschwarz, Kongorot, Kristallviolett, Malachitgrün, Methylenblau, Methylorange, Methylviolett, Variamin-Blau, Viktoriablau-Farbstoffe und/oder Mischungen davon.

11. Mehrfarbkomponenten-Klebersystem nach einem der vorhergehenden Ansprüche, wobei die mischbaren polymerisierbaren Komponenten und/oder die Härter-Komponente jeweils voneinander getrennt in Aufbewahrungseinheiten, vorzugsweise in Kartuschen, Tuben und/oder Dosen, vorliegen.

12. Mehrfarbkomponenten-Klebersystem nach einem der vorhergehenden Ansprüche, ferner umfassend eine Dosierhilfe zum Abmessen der mindestens zwei mischbaren polymerisierbaren Komponenten und/oder der Härter-Komponente.

13. Mehrfarbenkomponenten-Klebersystem nach Anspruch 12 wobei die Dosierhilfe ein skaliertes Meßbrett, eine skalierte Meßfolie, ein skaliertes Meßpapier, eine skalierte Tube, eine skalierte Kartusche, ein Meßbecher und/oder ein Meßzylinder ist.

14. Verwendung des Mehrfarbkomponenten-Klebersystems nach einem der Ansprüche 1 bis 13 zum Bereitstellen einer Klebermasse, Fugenmasse, Ausbesserungsmaterial und/oder Ausfüllmaterial für Kunststoffe, Natursteine, Keramik, Steingut, Porzellan, Metalle und/oder Holz.

15. Verwendung des Mehrfarbkomponenten-Klebersystems Anspruch 14 zum Verbinden von natürlichen mineralischen Substraten und/oder künstlichen Substraten mit mineralischer Optik.

16. Verfahren zum Herstellen eines farbangepassten Klebers, umfassend die folgenden Schritte:
a) Bereitstellen eines Mehrfarbkomponenten-Klebersystems nach einem der Ansprüche 1 bis 13,
b) Mischen von mindestens zwei mischbaren polymerisierbaren Komponenten zu einer gewünschten Farbgebung,
c) Zumischen mindestens einer Härter-Komponente.

17. Verfahren nach Anspruch 16, wobei die gewünschte Farbgebung dadurch erhalten wird,
dass in Schritt b) zunächst jeweils eine definierte Menge der verschiedenen mischbaren polymerisierbaren Komponenten, vorzugsweise in Form eines Stranges mit einem konstanten Durchmesser und einer definierten Länge, bereitgestellt wird und diese nachfolgend miteinander vermischt werden.

18. Verfahren nach Anspruch 16 oder 17, wobei in Schritt c) zunächst eine definierte Menge der Härter-Komponente, vorzugsweise in Form eines Stranges mit einem konstanten Durchmesser und einer definierten Länge, bereitgestellt wird und nachfolgend mit der Mischung der polymerisierbaren Komponenten aus Schritt b) vermischt wird.

19. Verfahren nach Anspruch 18, wobei die Länge des Stranges in Schritt b) und/oder c) mit Hilfe einer skalierten Dosierhilfe gemessen wird.

## Claims

1. Multicolor component adhesive system comprising at least two mutually miscible polymerizable components,
each of the at least two mutually miscible polymerizable components comprising one or more polymerizable compounds,
further comprising a curative component which is present separately from the miscible polymerizable components, and
a) one of the mutually miscible polymerizable components comprising no coloring agent and all further mutually miscible polymerizable components each comprising at least one coloring agent, or
b) the mutually miscible polymerizable components each comprising at least one coloring agent,
the mutually miscible polymerizable components which comprise at least one coloring agent each comprising coloring agents that are different in color from one another, and the miscible polymerizable components each being present separately from one another.

2. Multicolor component adhesive system according to Claim 1, each of the at least two mutually miscible polymerizable components and optionally the curative component comprising at least one thixotropic agent.

3. Multicolor component adhesive system according to any one of the preceding claims, the polymerizable compounds and the curative component being substantially colorless, transparent, opalescent, of a see-through champagne color and/or having a color lighter than a champagne see-through color.

4. Multicolor component adhesive system according to any one of the preceding claims, at least one of the mutually miscible polymerizable components and/or the curative component comprising at least one UV stabilizer.

5. Multicolor component adhesive system according to any one of the preceding claims, at least one of the mutually miscible polymerizable components and/or the curative component comprising at least one biocidal agent.

6. Multicolor component adhesive system according to any one of the preceding claims, the polymerizable compounds after polymerization producing a polymer which is selected from the group encompassing polyester resins, acrylic resins, polyurethane resins, epoxy resins, vinyl ester resins, epoxy acrylates and/or mixtures thereof.

7. Multicolor component adhesive system according to any one of the preceding claims, the coloring agents being inorganic and/or organic colorants.

8. Multicolor component adhesive system according to Claim 7, the inorganic colorants being selected from the group encompassing chalk, titanium dioxide, iron oxide, chromium oxide, cobalt oxide, carbon black, ocher, green earth, chrome yellow, red lead, ultramarine, umber, graphite, bismuth vanadate, zinc oxide, lithopones, metallic effect pigments, pearlescent pigments and/or mixtures thereof.

9. Multicolor component adhesive system according to Claim 7, the organic colorants being selected from the group of organic pigments encompassing azo dye pigments, anthraquinone pigments, quinophthalone pigments, isoindoline pigments, naphthalenetetracarboxylic acid pigments, indigoids, dioxazine pigments, quinacridone pigments, phthalocyanine pigments, isoindolinone pigments, perylene pigments, perinone pigments, organic metal complex pigments, alkali blue pigments, diketopyrrolopyrrole pigments and/or mixtures thereof.

10. Multicolor component adhesive system according to Claim 7, the organic colorants being selected from the group of organic dyes encompassing azo dyes, azine dyes, anthraquinone dyes, acridine dyes, alkaloid dyes, cyanine dyes, phenoxazine dyes, polymethine dyes, thiazine dyes, triarylmethane dyes, aniline blue, aniline black, anthracene blue, Bismarck brown, 2,4-diaminoazobenzene, Ciba blue, fuchsine, Hydron blue, Immedial black, Congo red, crystal violet, malachite green, methylene blue, methyl orange, methyl violet, Variamin blue, Victoria blue dyes and/or mixtures thereof.

11. Multicolor component adhesive system according to any one of the preceding claims, the miscible polymerizable components and/or the curative components each being present separately from one another in stock units, preferably in cartridges, tubes and/or cans.

12. Multicolor component adhesive system according to any one of the preceding claims, further comprising a metering aid for measuring out the at least two miscible polymerizable components and/or the curative component.

13. Multicolor component adhesive system according to Claim 12, the metering aid being a graduated planimetric board, a graduated planimetric film, a planimetric graduated paper, a graduated tube, a graduated cartridge, a volumetric cup and/or a volumetric cylinder.

14. Use of the multicolor component adhesive system according to any one of Claims 1 to 13 for providing an adhesive compound, jointing compound, repair material and/or filling material for plastics, natural stone, ceramic, earthenware, porcelain, metals and/or wood.

15. Use of the multicolor component adhesive system Claim 14 for joining natural mineral substrates and/or artificial substrates having a mineral appearance.

16. Method of producing a color-matched adhesive, comprising the following steps:
a) providing a multicolor component adhesive system according to any one of Claims 1 to 13,
b) mixing at least two miscible polymerizable components to a desired coloration,
c) admixing at least one curative component.

17. Method according to Claim 16, the desired coloration being obtained by
first providing in step b) in each case a defined amount of the different miscible polymerizable components, preferably in the form of a strand having a constant diameter and a defined length, and thereafter mixing them with one another.

18. Method according to Claim 16 or 17, step c) comprising first providing a defined amount of the curative component, preferably in the form of a strand having a constant diameter and a defined length, and thereafter mixing it with the mixture of the polymerizable components from step b).

19. Method according to Claim 18, the length of the strand in step b) and/or c) being measured by means of a graduated metering aid.

## Revendications

1. Système de colle à plusieurs composants colorés, comprenant
au moins deux composants polymérisables miscibles l'un avec l'autre, chacun au moins desdits deux composants polymérisables miscibles l'un à l'autre comprenant un ou plusieurs composés polymérisables,
comprenant en outre un composant durcisseur, lequel se présente séparé des composants polymérisables miscibles, et
a) dans lequel un des composants polymérisables miscibles l'un à l'autre ne comporte pas de moyen donnant de la couleur et dans lequel tous les autres composants polymérisables miscibles l'un à l'autre comportent au moins un moyen donnant de la couleur, ou
b) dans lequel les composants polymérisables miscibles l'un à l'autre comportent respectivement au moins un moyen donnant de la couleur,
sachant que les composants polymérisables miscibles l'un à l'autre qui comportent au moins un moyen donnant de la couleur comportent des moyens donnant de la couleur de couleurs respectivement différentes, et sachant que les composants polymérisables miscibles l'un à l'autre se présentent respectivement séparés les uns des autres.

2. Système de colle à plusieurs composants colorés selon la revendication 1, dans lequel au moins chacun desdits deux composants polymérisables miscibles l'un à l'autre, et en option le composant durcisseur, comportent au moins un agent thixotropiant.

3. Système de colle à plusieurs composants colorés selon l'une quelconque des revendications précédentes, dans lequel les composants polymérisables et le composant durcisseur sont essentiellement glaçants incolores, transparents, opalescents, de couleur champagne, et/ou présentent une couleur glaçante plus claire que champagne.

4. Système de colle à plusieurs composants colorés selon l'une quelconque des revendications précédentes, dans lequel au moins un des composants polymérisables miscibles l'un à l'autre et/ou le composant durcisseur comprennent au moins un stabilisateur aux UV.

5. Système de colle à plusieurs composants colorés selon l'une quelconque des revendications précédentes, dans lequel au moins un des composants polymérisables miscibles l'un à l'autre et/ou le composant durcisseur comprennent au moins un agent biocide.

6. Système de colle à plusieurs composants colorés selon l'une quelconque des revendications précédentes, dans lequel les composés polymérisables donnent après la polymérisation un polymère, lequel est choisi parmi le groupe comprenant
des résines de polyester, des résines acryliques, des résines de polyuréthane, des résines époxydes, des résines d'ester de vinyle, des époxyacrylates et/ou des mélanges de ceux-ci.

7. Système de colle à plusieurs composants colorés selon l'une quelconque des revendications précédentes, dans lequel les moyens donnant de la couleur sont des colorants inorganiques et/ou organiques.

8. Système de colle à plusieurs composants colorés selon la revendication 7, dans lequel les colorants inorganiques sont choisis parmi le groupe comprenant la craie, le dioxyde de titane, l'oxyde de fer, l'oxyde de chrome, l'oxyde de cobalt, le noir de fumée, l'ocre, la terre verte, le jaune de chrome, le minium, l'outremer, la terre d'ombre, le graphite, le vanadate de bismuth, l'oxyde de zinc, le lithopone, les pigments à effet métallisé, les pigments à effet nacré et/ou des mélanges de ceux-ci.

9. Système de colle à plusieurs composants colorés selon la revendication 7, dans lequel les colorants organiques sont choisis parmi le groupe des pigments organiques, comprenant
les pigments azoïques, les pigments d'anthraquinone, les pigments de quinophtalone, les pigments d'iso-indoline, les pigments d'acide naphtalène tétracarboxylique, les indigoïdes, les pigments de dioxazine, les pigments de quinacridone, les pigments de phtalocyanine, les pigments d'iso-indolinone, les pigments de pérylène, les pigments de périnone, les pigments organiques à complexe métallique, les pigments de bleu alcalin, les pigments de dicétopyrrolopyrrole et/ou des mélanges de ceux-ci.

10. Système de colle à plusieurs composants colorés selon la revendication 7, dans lequel les colorants organiques sont choisis parmi le groupe des colorants organiques comprenant
les colorants azoïques, les colorants d'azine, les colorants d'anthraquinone, les colorants d'acridine, les colorants d'alcaloïdes, les colorants de cyanine, les colorants de phénoxazine, les colorants de polyméthine, les colorants de thiazine, les colorants de triarylméthane, le bleu d'aniline, le noir d'aniline, le bleu d'anthracène, le brun Bismarck, le 2,4-diaminoazobenzène, le bleu de Ciba, la fuchsine, le bleu hydrone, le noir immedial, le rouge Congo, le violet cristal, le vert malachite, le bleu de méthylène, le méthylorange, le méthylviolet, le bleu variamine, les colorants bleus de Victoria et/ou des mélanges de ceux-ci.

11. Système de colle à plusieurs composants colorés selon l'une quelconque des revendications précédentes, dans lequel les composants polymérisables miscibles et/ou le composant durcisseur se présentent respectivement séparés les uns des autres dans des unités de stockage, de préférence dans des cartouches, des tubes et/ou des boîtes.

12. Système de colle à plusieurs composants colorés selon l'une quelconque des revendications précédentes, comprenant en outre un auxiliaire de dosage pour mesurer au moins lesdits deux composants polymérisables miscibles et/ou le composant durcisseur.

13. Système de colle à plusieurs composants colorés selon la revendication 12, dans lequel l'auxiliaire de dosage est une planchette de mesure graduée, un papier de mesure gradué, un tube gradué, une cartouche graduée, un verre gradué et/ou un cylindre gradué.

14. Utilisation du système de colle à plusieurs composants colorés selon l'une quelconque des revendications 1 à 13 pour mettre à disposition une masse de colle, une masse de joint, de la matière de réparation et/ou de la matière de remplissage pour des plastiques, des pierres naturelles, de la céramique, du grès, de la porcelaine, des métaux et/ou du bois.

15. Utilisation du système de colle à plusieurs composants colorés selon la revendication 14 pour assembler des substrats minéraux naturels et/ou des substrats artificiels de présentation minérale.

16. Procédé de préparation d'une colle adaptée en couleur, comprenant les étapes suivantes :
a) mise à disposition d'un système de colle à plusieurs composants colorés selon l'une quelconque des revendications 1 à 13,
b) mélangeage d'au moins deux composants polymérisables miscibles pour donner une teinte désirée,
c) addition au mélange d'au moins un composant durcisseur.

17. Procédé selon la revendication 16, dans lequel la teinte désirée est obtenue en ce que
dans l'étape b), on met d'abord à disposition respectivement une quantité définie des différents composants polymérisables miscibles, de préférence sous la forme d'un boudin d'un diamètre constant et d'une longueur définie, et que l'on mélange ensuite ces derniers les uns aux autres.

18. Procédé selon la revendication 16 ou 17, dans lequel, dans l'étape c), on met d'abord à disposition une quantité définie du composant durcisseur, de préférence sous la forme d'un boudin d'un diamètre constant et d'une longueur définie, et qu'on la mélange ensuite au mélange des composants polymérisables de l'étape b).

19. Procédé selon la revendication 18, dans lequel la longueur du boudin dans l'étape b) et/ou c) est mesurée à l'aide d'un auxiliaire de dosage gradué.
